# EUROPEAN PATENT SPECIFICATION

(11) **EP 2 719 529 B1**
(45) Date of publication and mention of the grant of the patent: **11.01.2017**
(21) Application number: 12187912.6
(22) Date of filing: 10.10.2012
(51) Int. Cl.: C08J 9/40, B32B 5/12, B32B 5/24, B32B 27/12, C08J 9/42, C09D 163/00

(54) **Prevention of depolymerization of polyalkylene terephthalate in laminated structures**
Verhinderung der Depolymerisierung von Polyalkylenterephthalat in laminierten Strukturen
Prévention de dépolymérisation de polytéréphtalate d'alkylène dans des structures stratifiées

(43) Date of publication of application: 16.04.2014
(73) Proprietor: Armacell Enterprise GmbH & Co. KG, 12529 Schönefeld OT Waltersdorf (DE)
(72) Inventor: Dolega, Justyna, 51164 Wroclaw (PL); Meller, Mika, 04400 Jarvenpaa (FI); Reuterlöv, Stefan, 18594 Vaxholm (SE)
(74) Representative: von Füner, Nicolai

(56) References cited:
- EP-A1- 2 345 538
- EP-A1- 2 423 249
- DATABASE WPI Week 201250 Thomson Scientific, London, GB; AN 2012-J58596 XP002696269, & JP 2012 140532 A (TOYOBO KK) 26 July 2012 (2012-07-26)

## Description

This invention describes a process of preventing depolymerization of cellular materials, based on polyalkylene terephthalate, when used in combination with thermoset materials as composite, such as sandwich structures.

### Description of the invention:

Polyalkylene terephthalates (PAT), such as polyethylene terephthalate (PET), polybutylene terephthalate (PBT) and polypropylene terephthalate (PPT), may be used to produce low density (< 300 kg/m³) structural and insulation foams. The most common is PET foam, which is widely used in variety of composite structures, such as wind turbine blades, automotive and marine applications, and even in building applications. Commercially available densities range from 60 kg/m³ to 300 kg/m³, and the foams are therefore considered to be low density foams. The excellent mechanical properties, especially in long term fatigue testing, make it an ideal candidate for such applications.

In composites in general (e.g. laminated structures, sandwich structures), the material consists of two or more materials, such as glass or carbon fibers mixed in plastic medium, or alternatively using low density core materials, such as core foams, honeycombs or balsawood coated with a rigid layer. The main advantages of composite materials are excellent mechanical properties combined with light weight. Typical sandwich structure composing of core foams has a thermoset resin (with or without reinforcing fibers) on one or all sides of the foam. The thermoset resin is typically polyester, epoxy or polyurethane based, and different hardeners are used to crosslink the resin during the manufacturing of the said composite structure.

As the core foam is typically encapsulated in the end-phase, it is considered to be inert to atmospheric conditions. However, it was found out surprisingly that certain combinations of resins and hardeners may create active sites, which attack then the polyalkylene terephthalates and cause a chain reaction leading to depolymerization. This attack may be by means of aminolysis, ammonolysis, alcoholysis (such as methanolysis), glycolysis or even hydrolysis. In specific conditions polyalkylene terephthalate treated with resin may be decomposed, leading to molecular weight reduction. Such a solvolytic cleavage of bonds in the backbone of these step-growth polymers results in loss of mechanical properties. Chemical depolymerization of PET waste is well known and industrialized, leading back to monomers or specialty products as polyols, plasticizers, unsaturated polyesters or alkyds. Such depolymerization methods have been described in the literature in combination with PET recycling, for example in CN101456809A via hydrolysis; or as in US7521516B2 and US4193896A via aminolysis; or for example US4578502A, FR2825701B1, CN1390826A, TW591049B, and TW200938570A via alcoholysis; or alternatively such as EP1153070B1, DE19643479B4, MX2008002085, and JP8151438A via glycolysis; or even some of these combined as is described in JP2009173554A and WO2006039872A8. It needs to be noted here that typical composite manufacturing processes do not subject the material to such extreme conditions as described in the examples, so degradation via such mechanism is not expected and considered an anomaly.

In order to prevent resin induced depolymerization, the foam must be treated with correct chemicals or combination of chemicals to prevent depolymerization to take place. A very little literature exists in the area of preventing depolymerization of polyalkylene terephthalates, and the few published have focused on fiber production, such as CS8706387A1 or US3852101A. In traditional approach the main focus is on copolymerization of polyesters with additives improving the hydrolytic and/ or aminolytic resistance, as disclosed in JP59105025A, JP57049620A and JP57008222A. Another way of stabilization is adding the active components during polymer processing. The US5885709 and CH621135A5 disclose stabilization of polyester fibers by using of carbodiimides and polycarbodiimides as the end-capping additives, improving the hydrolytic stability of polyesters. According to US2010120946A1 and US2006057408A1 the use of epoxidized fatty acid esters and glycerides results in improved hydrolytic stability of polyester films. US3657191A discloses the modification of linear polyester with ethylene carbonates or monofunctional glycidyl ethers, reacting with polyester at low range of temperature. Even though all of these approaches concerns polyesters none of them refers to foams, especially the foams obtained in reactive extrusion process.

EP 2 345 538 A1 discloses a material consisting of an expanded polyester as a core being covered with one outer protective layer consisting of unexpanded polyester containing from 0.5 to 60 weight-percent functional additives being flame retardant agents and/or anti-hydrolysis agents. EP 2 423 249 A1 discloses a material comprising an expanded polyalkylidene terephthalate based layer being covered with one outer layer comprising 50 weight-% of a solvent (including water) soluble inorganic chalkogene based compound which itself comprises an inorganic material that solidifies in cold to warm state during evaporation of the solvent and/or by influence of air and/or vacuum and/or humidity and/or one of its components. J. Scheirs et al. (Additives for the Modification of Poly(Ethylene Terephthalate) to Produce Engineering-Grade Polymers; Modern Polyesters: Chemistry and Technology of Polyesters and Copolyesters; 2003; pages 495-540) discloses antihydrolysis additives for PET, such as carbodiimides or polycarbodiimides, wherein said additives are directly dosed to PET.

Foams made of polyalkylene terephthalates are a material of great interests as the core materials in sandwich structures and laminate structures. PET foams offer an excellent combination of mechanical properties, dimensional stability at elevated temperatures and recyclability. However, as all of the polycondensation polymers, in specific conditions PET degradation and conversion into lower molecular chain polymer may occur. We observed that in some specific conditions thermoset resins used for core foams lamination (e.g. epoxy, polyester and vinylester resins) speed up depolymerization, allowing degradation to proceed in a different way and resulting in deterioration of core foam properties. Such a phenomenon has been noticed for laminates obtained via very long curing time at too high temperature, either when the excessive amount of resin curing agent was used or when a poor mixing of resin with curing agent was applied. Depolymerization reactions are supported by solvents (alcohols, ketones) and/or different types of curing agents (e.g. aliphatic amines, aromatic amines, cycloaliphatic amines, peroxides) and/or accelerators (e.g. sulfenamides, thiurams) present in resin itself or its curing agent.

It is known that some chemicals could accelerate the rate of degradation or change the mechanism of degradation. In this invention the chemical strategies have been devised to retard these collateral reactions of solvolysis (hydrolysis, alcoholysis, aminolysis, ammonolysis, glycolysis, etc.) of polyalkylene terephthalate foams. This invention describes several strategies on how to prevent or significantly retard depolymerization of polyalkylene terephthalate foams caused by the components of thermoset resins used for core foam lamination or the side-products created during curing or thermal decomposition of such resins. In the present invention the foam is covered with the scavenger(s) by coating, spraying, dipping or similar and the scavenger(s) protecting the foam from chemically-driven degradation may be embedded in the foam during the reactive extrusion. The scavengers applied into the foam can either react with PAT in a reactive extrusion process, reducing the overall carboxyl end groups content and leading to higher solvolytic and thermal stability, or stay in unreacted form during foam production and react just during resin curing in a core foam lamination process. In the protective layer superimposed on the foam surface the scavengers are always in an unreacted form and their composition and concentration depends on the applied thermoset resin type, composition, quantity and curing conditions.

Thus, the invention refers to a process for the protection of a polyalkylene terephthalate cellular foam material, wherein the process comprises coating the foam with a protective layer of thermoset resin(s) comprising scavengers which prevent depolymerization due to thermally initiated reaction between the thermoset resins(s) and the thermoplastic foam and moreover, a process, wherein additionally the polyalkylene terephthalate cellular foam material comprises scavengers which prevent depolymerization due to thermally initiated reaction between the thermoset resins(s) and the thermoplastic foam.

Besides the improved chemical stability of the core foam additional improvement in bonding of laminated layers was observed. Therefore, a much higher peel-off strength of composite was noticed once the protective layer is applied. This means that the laminate structure further provides an improved adhesion between the laminated layers and the foam core due to interaction of scavengers present in the protective layer with the thermoset resin and the polymer foam.

The scavenger(s) used to protect the foam against depolymerization includes aromatic, aliphatic and alicyclic anhydrides, anhydrides containing copolymers, carboxylic acids, esters, ketenes and their dimers, carbonic and pyrocarbonic esters, sulfonic esters and anhydrides, isocyanates and polyisocyanates, epoxides, carbodiimides and polycarbodiimides, aziridines and polyaziridines, glycidyl ethers, cyclic lactones and lactames and its derivatives, peroxide scavengers and mixtures thereof. The scavenger reacts with chemicals responsible for degradation, keeping them away from the foam or significantly reducing their concentration close to the foam surface and therefore protects foam against chain cleavage and depolymerization. The scavenger(s) should be used in amounts ensuring the stability of foam during resin curing process, preferably in amounts equal or in excess to the stochiometric ratio of curing agents used for resin curing process (such as for example amines, imidazoles, polyamides or polymercaptans). It is possible to use larger excesses of scavenger(s). Additionally in some cases the usage of scavenger(s) significantly improves the peel-off strength of resulted composite.

The most important anhydrides applicable as scavengers to protect against depolymerization belong to the group of aromatic, alicyclic or aliphatic anhydrides, eg. maleic anhydride, phthalic anhydride, succinic anhydride, isatoic anhydride, trimellitic anhydride, methyltetrahydrophthalic anhydride, tetrahydrophthalic anhydride, methyl nadic anhydride, hexahydrophthalic anhydride, methylhexahydrophthalic anhydride, 1-cyclopentene-1,2-dicarboxylic anhydride, 1,2,3,4-cyclopentane tetracarboxylic dianhydride, cyclobutane-1,2,3,4-tetracarboxylic dianhydride, 1,2,4,5-benzenetetracarboxylic anhydride (pyromellitic anhydride), 3,4,5,6-tetrahydrophthalic anhydride, 3,3',4,4'-benzophenonetetracarboxylic dianhydride, 1,1,2,2-ethanetetracarboxylic dianhydride, 1,4,5,8-naphthalenetetracarboxylic dianhydride, 2,3,6,7-naphtalenetetracarboxylic dianhydride, 3,4-dicarboxy-1,2,3,4-tetrahydro-1-naphthalenesuccinic anhydride, 3,4,9,10-perylene tetracarboxylic dianhydride, tetrahydrofuran-2,3,4,5-tetracarboxylic dianhydride, 3,3',4,4'-biphenyltetracarboxylic dianhydride, 2,3,3',4'-biphenyltetracarboxylic acid dianhydride, 2,2',3,3'-diphenyl tetracarboxylic dianhydride, 4,4'-oxydiphthalic anhydride, 4,4'-(2-acetoxy-1,3-glyceryl)bisanhydro trimellitate, bis(2,3-dicarboxyphenyl) methane dianhydride, 2,2-bis(2,3-dicarboxyphenyl)propane dianhydride, 2,2-bis(3,4-dicarboxyphenyl)propane dianhydride, 1,1-bis(2,3-dicarboxyphenyl)ethane dianhydride, 1,1-bis(3,4-dicarboxyphenyl)ethane dianhydride, diphenylsulfonetetracarboxylic dianhydride and the similar, or the combination of these anhydrides.

The following glycidyl ethers may be advantageously used: isononyl glycidyl ether, stearyl glycidyl ether, phenyl glycidyl ether, p-tertbutyl-phenyl glycidyl ether, tricyclodecylmethylene glycidyl ether and the like. Dicarboxylic or polycarboxylic acids as maleic acid, malonic and methylenemalonic acid, citraconic acid, mesaconic acid, itaconic acid, tricarballylic acid, aconitic acid, ethylenetetracarboxylic acid, 1,1,3-propanetetracarboxylic acid, 1,1,3,3,5,5-pentanehexacarboxylic acid, hexanehexacarboxylic acid, cyclopentanetetracarboxylic acid, cyclohexanehexacarboxylic acid, tetrahydrofurantetracarboxylic acid, phthalic acid, terephthalic acid, benzene-tricarboxylic, -tetracarboxylic or -pentacarboxylic acid, 2,5-furandicarboxylic acid, hemimellitic acid, trimesic acid, mellitic acid and their esters could be useful.

Exemplary carbodiimides beneficiary for product stabilization are diisopropyl carbodiimide, dicyclohexylcarbodiimide, methyl-t-buthyl carbodiimide, tertbutyl-phenyl carbodiimide, tetramethylene bis-diisobutyl carbodiimide, N-dimethylaminopropyl-tertbutyl carbodiimide, polycarbodiimides containing two or more carbodiimide groups and similar alkyl-, phenyl- or heteroatom substituted cycloaliphatic and aromatic carbodiimides.

Suitable epoxy compounds are mono-, di-, tri- and polyfunctional epoxides, as glycidyl ethers of bisphenol A and bisphenol F, glycidyl ethers of tetraphenylethane, phenolformaldehyde and o-cresolformaldehyde novolaks, glycidyl esters of carboxylic acids, heterocyclic epoxy resins (e.g. triglycidyl isocyanurate), cycloaliphatic epoxy resins, tetraglycidyl-4,4'-methylenebenzamine and N,N,N',N'-tetraglycidyldiaminophenylmethane.

Preferred cyanates and polyisocyanates include 1,4-diisocyanatobutane, hexamethylene- and 4-butylhexamethylene diisocyanate, 1,12-dodecandiisocyanate, 4-butylhexamethylenedii-socyanate, p-phenylenediisocyanate, m- and p-xylylenediisocyanate, 1,5- naphthalenediisocyanate, eicosan-1,20-diisocyanate, 2,2,4- and 2,4,4-trimethylhexamethylenediisocyanate, toluene-2,4-diisocyanate, toluene-2,6-diisocyanate, isophorone diisocyanate, sulfonyl diisocyanate, diphenylmethane-3,3'-diisocyanate, diphenylmethane-3,4'-diisocyanate, diphenylmethane-4,4'-diisocyanate, 3,3'-dimethyl- and 3,3'-dimethoxy4,4'-diisocyanatodiphenyl, 3,3'-dimethoxy-4,4'-diisocyanatodiphenylmethane, 1,3- and 1,4-cyclohexane diisocyanate, dimers, trimers and tetramers of diisocyanates, polymeric derivatives thereof and the like.

In the group of peroxide scavengers one may find esters of β-thiodipropionic acid (e.g. lauryl, stearyl, tridecyl and similar), 1-octadecyldisulfanyloctadecane, 2-mercaptobenzimidazole or zinc salt of 2-mercaptobenzimidazole, zinc dibutyldithiocarbamate, pentaerythritol tetrakis(β-dodecylmercapto)propionate. Ethylene and propylene glycol diglycidyl ether, poly(ethylene glycol) diglycidyl ether, poly(propylene glycol) diglycidyl ether, polytetramethylene glycol diglycidyl ether, glycerol diglycidyl ether, diglycidyl phthalate, dicyclopentadiene diepoxide, 1,3-butadiene diepoxide or similar could be also applicable.

All the scavengers could be used alone or in the mixture with other chemicals, carriers, solvents, compatibilizers and stabilizers.

To evaluate the effectiveness of each modification some physical and chemical properties of PAT foams were measured. Hardness test was applied to examine the PAT foam brittleness - once the degradation happens foam losses its hardness. Because there is no specific standard for polyalkylene terephthalate foam hardness evaluation the Shore A hardness measurements were performed accordingly to the ISO 868 standard. As a result of PAT foam depolymerization the significant increase of chain terminating end groups is observed. The carboxyl end groups concentration (CEG) was analyzed based on the ASTM D 7409 - 07 standard by titration. Additionally the molecular weight changes were monitored based on the ASTM D5296-05 standard, using hexafluoroisopropanol as a solvent. The values obtained for unmodified core foams (without any coating and heat treatment) were used as a reference and were considered as 1,00 and all other values were normalized to this value.

For obtained sandwich structures peel-off test was done. The goal was to compare the bonding strength of each composition and determine the force required for debonding of face-sheets from the PAT core structure. Peel-off test was carried out for sandwich structures accordingly to the internal procedure, using a tensile machine and measuring the strength required to peel-off the laminated layer from the foam core. The testing machine provides a constant peel rate (10 mm/min.) and continuously measures the force of detachment during the test. Composite thickness was 20 mm, specimen width: 25 mm and length: 100 mm.

Table 1 describes the molecular weight changes and Shore A hardness variations taking place during heat treatment of polyethylene terephthalate foams and depicts the influence of various thermoset resin and curing processes on the properties of a foamed material. 9

**Table 1. Curing time and resin influence on PET core foam properties.**

| **Foam density [kg/m³]** | **Resin and curing agent** | **Curing conditions** | **Relative Mn** | **Relative Mw** | **CEG [mmol/kg]** | **Shore A hardness** |
|---|---|---|---|---|---|---|
| PET115 (CE2) | - | | 1.00 | 1.00 | 57.1 | 60 |
| PET115 (CE2) | - | 120°C, 48h | 0.98 | 0.97 | 74.7 | 59 |
| PET115 (CE2) | - | 150°C, 48h | 0.95 | 0.94 | 75.9/76.3 | 57 |
| stabilized PET115 (CE3) | - | 150°C, 48h | 0.95 | 0.95 | 73.8 | 58 |
| PET115 (CE2) | Araldite^{®} 420 A + Araldite^{®} 420 B 100 wit.% : 40 wt.% | 120°C, 48h | 0.96 | 0.96 | 73.2 | 59 |
| PET115 (CE2) | Araldite^{®} 420 A + Araldite^{®} 420 B 100 wt.% : 40 wt.% | 150°C, 48h | 0.94 | 0.94 | 76.0 | 52 |
| stabilized PET11 5 (CE3) | Araldite^{®} 420 A + Araldite^{®} 420 B 100 wt.% : 40 wt.% | 150°C, 48h | 0.95 | 0.94 | 73.5 | 55 |
| PET115 (CE4) | Araldite^{®} 420 A + Araldite^{®} 420 B 100 wt.% : 50 wt.% | 150°C, 48h | 0.93 | 0.90 | 75.5 | 53 |
| PET115 (CE5) | Araldite^{®} 420 A + Araldite^{®} 420 B 100 wt.% : 40 wt.% poor mixing | 150°C, 48h | 0.89 | 0.81 | 74.0 | 27 |
| PET150 (CE1) | - | | 1.00 | 1.00 | 71.2 | 69 |
| PET150 (CE1) | - | 160°C, 48h | 0.93 | 0.93 | 75.9 | 65 |
| PET150 (CE1) | Axson^{®} EPO752 + Epolam 2080 100 wt.% : 16 wt.% | 160°C, 48h | 0.92 | 0.91 | 76.1 | 60 |
| PET150 (CE6) | - | 80°C, 16h + 100 cycles at 120°C | 0.99 | 0.99 | 75.6 | 67 |
| PET150 (CE6) | Ampreg 22 resin + hardener 100 wt.%: 28 wt.% | 80°C, 16h +100 cycles at 120°C | 0.96 | 0.96 | 74.1 | 60 |

Normalized number average molecular weight (relative Mn) and weight average molecular weight (relative Mw) of PET foam is slightly reduced after a heat treatment - the longer heating time and the higher temperature, the higher molecular weight reduction. Heat induced decrease of polymer chain length is followed by increase of carboxyl end groups, proofing that the main mechanism of degradation is hydrolysis, when the reverse reaction of esterification occurs. The presence of hydrolytic stabilizers in the foam slightly reduces the rate of hydrolytic decomposition.

In laminates obtained by coating with the properly prepared resin (as in Comparative Example 2 and 3) and cured at recommended by producer temperature, the core foam properties stay unmodified and all the analyzed values are close to the corresponding values of heat treated foams. The same laminate cured at higher temperature is more degraded, but the main mechanism of degradation is still hydrolysis, so the molecular weight reduction and the respective carboxyl end group concentration increase is observed. The core foam containing additional amount of hydrolytic stabilizer shows better hydrolytic stability (Comparative Example 2 vs. 3).

Degradation is more pronounced and its mechanism is different once the resin containing too high concentration of the hardener is used, as presented in Comparative Example 4. The weight average molecular weight of core foam is reduced but the chemistry of degradation is changed. The carboxyl end group concentration stays almost unchanged, also the decrease of number average molecular weight is less pronounced in respect to the changes of weight average molecular weight. So besides the hydrolytic degradation, the additional process of aminolysis driven by resin components leads to polymer chain cleavage. Even worse degradation is observed once the improperly mixed resin and hardener system is used for lamination (Comparative Example 5). Significant depolymerization is driven by the reactive sites created in exothermic curing process, leading to lose of strength and reduction of weight and number average molecular weight of polymer. Again, the carboxylic end group concentration does not increase proportionally to the molecule weight reduction, proving the aminolysis as the main source of degradation.

Table 2 shows the influence of exemplary protective layers on chosen physical and chemical parameters of foamed products. All the protective layers provide improvement of chemical stability of the core foam. The Shore hardness of core foam laminated with poorly mixed resin significantly increases after applying the protective layer and the molecular weight decrease driven by the solvolytic degradation is stopped. The ingredients of resins responsible for polymer chain scission react with appropriate chemicals in protective layer and the kinetics of core material degradation is significantly reduced. Comparing the Innovative Examples 4 and 5 the influence of additional hydrolytic stabilization of foam is depicted, the major benefit is the reduced carboxyl end group concentration what brings better long term stability.

**Table 2. Protective layers influence on physicochemical parameters of core foams.**

| **Foam density [kg/m³]** | **Resin and curing agent** | **Protective layer** | **Curing conditions** | **Relative Mn** | **Relative Mw** | **CEG [mmol/kg]** | **Shore A hardness** |
|---|---|---|---|---|---|---|---|
| PET115 (IE1) | Araldite^{®} 420 A + 420 B 100 wt.% : 40 wt.% poor mixing | Araldite^{®} 420 A + pyromellitic dianhydride (PMDA:amine = 1:1 n/n) | 1 50°C, 48h | 1.00 | 0.98 | 75.7 | 61 |
| PET115 (IE2) | Araldite^{®} 420 A + 420 B 100 wt.% : 40 wt.% poor mixing | Araldite^{®} 420 A + pyromellitic dianhydride (PMDA:amine = 2:1 n/n) | 150°C, 48h | 1.10 | 1.00 | 76.2 | 57 |
| PET115 (IE3) | Araldite^{®} 420 A + 420 B 100 wet.% : 40 wit.% poor mixing | Araldite^{®} 420 A + methyltetrahydrophthalic anhydride (MTHPA:amine = 1:1 n/n) | 150°C, 48h | 0.99 | 1.00 | 72.9 | 56 |
| PET115 (IE4) | Araldite^{®} 420 A + 420 B 100 wt.% : 40 wt.% poor mixing | Araldite^{®} 420 A + policarbodiimide (carbodiimide:amine = 1:1 n/n) | 1 50°C, 48h | 0.99 | 1.10 | 74.7 | 58 |
| stabilized PET115 (IE5) | Araldite^{®} 420 A + 420 B 100 wt.% : 40 wt.% poor mixing | Araldite^{®} 420 A + policarbodiimide (carbodiimide:amine = 1:1 n/n) | 150°C, 48h | 1.00 | 1.00 | 72.9 | 58 |
| PET150 (IE6) | Axson^{®} EP0752 + Epolam 2080 100 wt.% : 16 wt.% | Axson^{®} EP0752 + 4,4'-methylene-bis(N,N-diglycidylaniline) (aniline:amines = 1:1 n/n) | 160°C, 48h | 0.92 | 0.94 | 74.2 | 63 |
| PET150 (IE7) | Ampreg 22 resin + hardener 100 wt.% : 28 wt.% | pyromellitic dianhydride + 4,4'-methylene-bis (N,N-diglycidylaniline) (PMDA+aniline:amines = 0,5:1,0:1,0 n/n/n) | 80°C, 16h 100 cycles at 120°C | 1.00 | 0.99 | 72.8 | 62 |

Besides the improved chemical resistance against depolymerization it was surprisingly observed that the adhesion of composite faces in a presence of additional protective layers is much better comparing to the same composite without such layers. In table 3 the influence of protective layers on the peel-off force of composite is described. For this evaluation the composite obtained by PET foam coating with properly prepared resin system was treated as a reference and the peel-off force recorded for such sample was 47 N. The same resin composition but inhomogeneously mixed and applied in such a poorly dispersed form on the PET foam surface caused much higher degradation and as a result the skin delamination was easier. Force required for skin peel-off was reduced by almost 20%. The protective layers not only prevented the degradation caused by active sites of improperly dispersed amine hardener but also increased the adhesion between the foam and resin over the values noticed for a properly prepared composite. In both tested cases (innovative Example 1 and 2) the peel-off strength was increased over 20% against the non-degraded and over 50% against the degraded sample.

**Table 3. Protective layers influence on peel-off strength of resulted composite.**

| **Foam density [kg/m³]** | **Resin and curing agent** | **Protective layer** | **Curing conditions** | **Peel-off force** |
|---|---|---|---|---|
| PET 115 (CE2) | Araldite^{®} 420 A + 420 B 1 00 wt.% : 40 wt.% | - | 150°C, 48h | 47 N (reference, standard) |
| PET 115 (CE5) | Araldite^{®} 420 A + 420 B 100 wt.% : 40 wt.% poor mixing | - | 150°C, 48h | 38 N (reference, degraded) |
| PET 115 (IE1) | Araldite^{®} 420 A + 420 B 100 wt.% : 40 wt.% poor mixing | Araldite^{®} 420 A + pyromellitic dianhydride (PMDA:amine 1:1 n/n) | 150°C, 48h | 58 N (+53%) |
| PET 115 (IE2) | Araldite^{®} 420 A + 420 B 100 wt.% : 40 wt.% poor mixing | Araldite^{®} 420 A + pyromellitic dianhydride (PMDA:amine 2:1 n/n) | 150°C, 48h | 60 N (+58%) |

### Examples

### Comparative Example 1 (CE1)

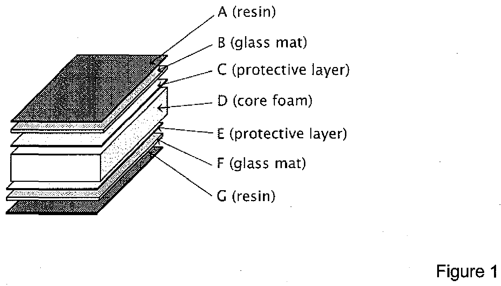

A PET foam of a density 150 kg/m³ (layer D in Fig. 1) was laminated with a glass fiber mat (Quadraxial Glass Fabric, weight: 970 g/m² structure: 0°/-45°/90°/+45°) using Axson^{®} EPO752 resin in combination with Epolam 2080. Resin and hardener mixture hardener (100 wt% of resin and 16 wt% of hardener) was applied to the foamed surface creating a thin uniform layer (C and E in Fig.1). The glass fiber mat was laid down on such surface (layer B and F in Fig. 1), brushed to get the impregnation and remove entrapped air and afterwards covered with additional amount of resin mixture (layers A and G in Fig. 1), to achieve complete saturation of the glass fibers. Total consumption of resin was 2,5 kg/m² of foam. Such a laminate was cured at 160 °C for 48h and after slow cooling to ambient temperature the laminated skins were removed. After delamination the foam core was characterized in terms of Shore A hardness, molecular weight distribution and carboxyl end groups content. The same heat treatment cycle (160 °C/ 48h) was repeated for unmodified foam (without epoxy resin), to evaluate the influence of curing conditions on the core properties.

### Comparative Example 2 (CE2)

A PET foam of a density 115 kg/m³ (layer D in Fig. 1) was laminated with a glass fiber mat (Quadraxial Glass Fabric, weight: 970 g/m² structure: 0°/-45°/90°/+45°) using Araldite^{®} 420A resin in combination with Araldite^{®} 420B hardener (resin to hardener ratio: 100:40 wt/wt). The components were thoroughly stirred to ensure full homogeneity and applied to the foam surface creating a thin uniform layer (C and E in Fig.1). The glass fiber mat was laid down on the surface (layer B and F in Fig. 1), brushed to get the impregnation and remove entrapped air and afterwards covered with additional amount of resin mixture (layers A and G in Fig. 1), to achieve complete saturation of the glass fibers. Total consumption of resin was 2,5 kg/m² of foam. Resulted laminate was cured at 150°C for 48h. After slow cooling to ambient temperature the laminated skins were removed and peel off strength was noticed. After delamination the foam core was characterized in terms of Shore A hardness, molecular weight distribution and carboxyl end groups content. The same heat treatment cycle (150°C/ 48h plus additional measurement at 120°C/ 48h) was done for unmodified foam (without lamination) to evaluate the influence of curing conditions on the core properties.

### Comparative Example 3 (CE3)

The same experiment as described in Comparative Example 2 was repeated but with the use of PET foam containing 0,5 wt.% of poly-(1,3,5-triisopropylphenylene-2,4-carbodiimide) in the recipe (layer D in Fig. 1). Resulted composite after delamination was analyzed in terms of Shore A hardness, molecular weight distribution and carboxyl end groups content.

### Comparative Example 4 (CE4)

The same experiment as described in Comparative Example 2 was repeated with an excessive amount of hardener, using resin to hardener ratio 100:50 wt/wt. Resin loading and composite preparation method stays unchanged. Resulted laminate was cured at 150°C for 48h. After slow cooling to ambient temperature the laminated skins were removed and foam core was analyzed in terms of Shore A hardness, molecular weight distribution and carboxyl end groups content.

### Comparative Example 5 (CE5)

A laminate was obtained by carrying out the same procedure as conducted in Comparative Example 2 except that resin and hardener were not mixed properly. The inhomogeneous resin and hardener mixture was used for lamination and such composite was cured at 150°C for 48h. After slow cooling to ambient temperature the laminated skins were removed and peel off strength was noticed. After delamination the foam core was characterized in terms of Shore A hardness, molecular weight distribution and carboxyl end groups content.

### Comparative Example 6 (CE6)

A 25 mm thick PET foam of density 150 kg/m³ (layer D in Fig. 1) was laminated with glass fiber mat using Ampreg 22 resin/ Ampreg 22 hardener mixture (resin to hardener ratio: 100:28 wt/wt, total load 1,8 kg/m²). The composite product was cured in the oven at 80°C for 16h. The composite material was then subjected to 100 cycles in 120°C after which the laminated skins were removed and the foam core was characterized in terms of Shore A hardness, molecular weight distribution and carboxyl end groups content.

### Innovative Example 1 (IE1)

A 25 mm thick PET foam of density 115 kg/m³ (layer D in Fig. 1) was coated with 1,2,4,5-benzenetetracarboxylic anhydride dispersion in Araldite^{®} 420A (Fig. 1, layers C and E). The surface was covered with a glass fiber mat (Quadraxial Glass Fabric, weight: 970 g/m² structure: 0°/-45°/90°/+45°, layers B and F in Fig. 1) and impregnated with poorly mixed Araldite^{®} 420A resin and Araldite^{®} 420B hardener (100:40 wt/wt, respectively) (layers A and G in Fig. 1). The anhydrate amount was equal to the amount of 4,7,10-trioxatridecane-1,13-diamine in Araldite^{®} 420B (1:1 n/n ratio) and the total load of resin was 2,5 kg/m². Such a laminate was cured at 150°C for 48h. After slow cooling to ambient temperature the laminated skins were removed and peel off strength was noticed. After delamination the foam core was characterized in terms of Shore A hardness, molecular weight distribution and carboxyl end groups content.

### Innovative Example 2 (IE2)

A laminate was obtained by carrying out the same procedure as conducted in Innovative Example 1 except that 1,2,4,5-benzenetetracarboxylic anhydride concentration was twice as high comparing to 4,7,10-trioxatridecane-1,13-diamine content in Araldite^{®} 420B (2:1 n/n ratio). The total load of resin was 2,5 kg/m² and resulted laminate was cured at 150°C for 48h. After slow cooling to ambient temperature the laminated skins were removed and peel off strength was noticed. After delamination the foam core was characterized in terms of Shore A hardness, molecular weight distribution and carboxyl end groups content.

### Innovative Example 3 (IE3)

A laminate was obtained by carrying out the same procedure as conducted in Innovative Example 1 but with the use of methyltetrahydrophthalic anhydride instead of 1,2,4,5-benzenetetracarboxylic anhydride (1:1 n/n ratio of MTHPA in respect to diamine content in Araldite^{®} 420B). Resulted laminate containing 2,5 kg of resin per m² of foam was cured at 150°C for 48h. After slow cooling to ambient temperature the laminated skins were removed and the foam core was characterized in terms of Shore A hardness, molecular weight distribution and carboxyl end groups content.

### Innovative Example 4 (IE4)

A laminate was obtained by carrying out the same procedure as conducted in Innovative Example 1 except that protective layer contained poly-(1,3,5-triisopropylphenylene-2,4-carbodiimide) dispersion in Araldite^{®} 420A. The surface was covered with a glass fiber mat (Quadraxial Glass Fabric, weight: 970 g/m² structure: 0°/-45°/90°/+45°, layers B and F in Fig. 1) and impregnated with poorly mixed Araldite^{®} 420A resin and Araldite^{®} 420B hardener (100:40 wt/wt, respectively) (layers A and G in Fig. 1). The polycarbodiimide amount was equal to the amount of 4,7,10-trioxatridecane-1,13-diamine in Araldite^{®} 420B (1:1 n/n ratio) and the total load of resin was 2,5 kg/m². Such a laminate was cured at 150°C for 48h. After slow cooling to ambient temperature the laminated skins were removed and foam core was characterized in terms of Shore A hardness, molecular weight distribution and carboxyl end groups content.

### Innovative Example 5 (IE5)

The same experiment as disclosed in Innovative Example 4 was repeated but using the poly-(1,3,5-triisopropylphenylene-2,4-carbodiimide) containing PET foam (0,5 wt. %) of a density 115 kg/m³. The protective layer composition, laminate preparation and curing conditions were exactly the same. Foam after delamination was analyzed in terms of Shore A hardness, molecular weight distribution and carboxyl end groups content.

### Innovative Example 6 (IE6)

A 150 kg/m³ PET foam surface (layer D in Fig. 1) was coated with 4,4'-methylenebis(N,N-diglycidylaniline) solution in Axson^{®} EPO752 resin (Fig. 1, layers C and E) and covered with a glass fiber mat (Quadraxial Glass Fabric, weight: 970 g/m² structure: 0°/-45°/90°/+45°, Fig. 1, layers B and F). The laminate was impregnated with Axson^{®} EPO752 resin in combination with Epolam 2080 hardener (resin to hardener ratio: 100:16 wt/wt; Fig. 1, layers A and G). Such a laminate was cured at 160 °C for 48h. The 4,4'-methylenebis(N,N-diglycidylaniline) amount was equal to the amount of amines (diethyltoluenediamine, 2,2'-dimethyl-4,4'-methylene bis(cyclohexylamine) and 3-aminomethyl-3,5,5-trimethylcyclohexylamine) in hardener (1:1 n/n ratio) and the total load of resin was 2,5 kg/m². After slow cooling to ambient temperature the laminated skins were removed and foam core was characterized in terms of Shore A hardness, molecular weight distribution and carboxyl end groups content.

### Innovative Example 7 (IE7)

A 25 mm thick PET foam of density 150 kg/m³ (layer D in Fig. 1) was coated with a dispersion of 1,2,4,5-benzenetetracarboxylic anhydride in 4,4'-methylenebis(N,N-diglycidylaniline) (Fig. 1, layers C and E). The surface was afterwards covered with glass fiber mat (Quadraxial Glass Fabric, weight: 970 g/m² structure: 0°/-45°/90°/+45°, layers B and F in Fig. 1) and impregnated with Ampreg 22 resin/ Ampreg 22 hardener mixture (resin to hardener ratio: 100:28 wt/wt) (layers A and G in Fig. 1). The total ratio of anhydrate and aniline was equal to the total load of amines in hardener (3,6-dioxaoctamethylenediamine, 3-aminomethyl-3,5,5-trimethylcyclohexylamine and polyoxyalkyleneamine) (1:1 n/n ratio) with total load of resin 1,8 kg/m². The composite product was cured in the oven at 80°C for 16hrs. The composite material was then subjected to 100 cycles at 120°C after which the laminated skins were removed and foam core was characterized in terms of Shore A hardness, molecular weight distribution and carboxyl end groups content.

## Claims

1. A process for the protection of a polyalkylene terephthalate cellular foam material, wherein the process comprises coating the foam with a protective layer of thermoset resin(s) comprising scavengers which prevent depolymerization due to thermally initiated reaction between the thermoset resin(s) and the thermoplastic foam, wherein the scavengers are selected from aromatic, aliphatic and alicyclic anhydrides, anhydrides containing copolymers, carboxylic acids, esters, ketenes and their dimers, carbonic and pyrocarbonic esters, sulfonic esters and anhydrides, isocyanates and polyisocyanates, epoxides, carbodiimides and polycarbodiimides, aziridines and polyaziridines, glycidyl ethers, cyclic lactones and lactames and its derivatives, peroxide scavengers and mixtures thereof.

2. The process according to claim 1, wherein additionally the polyalkylene terephthalate cellular foam material comprises scavengers which prevent depolymerization due to thermally initiated reaction between the thermoset resins(s) and the thermoplastic foam.

3. A laminate structure based on the protective layer, the thermoset resin(s) and the thermoplastic foam obtainable by the process according to any of claims 1 to 2.

4. The laminate structure according to claim 3 in the form of a sandwich structure, wherein the sandwich structure composite material comprises additional protective layers.

## Patentansprüche

1. Verfahren zum Schutz eines zellulären Schaummaterials auf der Basis von Polyalkylenterephthalat, wobei das Verfahren die Beschichtung des Schaums mit einer Schutzschicht aus Duroplastharz(en) umfasst, das (die) seinerseits (ihrerseits) Radikalfänger umfasst (umfassen), welche die Depolymerisation aufgrund der thermisch initiierten Reaktion zwischen dem (den) Duroplastharz(en) und dem thermoplastischen Schaum verhindern, wobei die Radikalfänger ausgewählt werden aus aromatischen, aliphatischen und alicyclischen Anhydriden, Anhydriden, die Copolymere enthalten, Carbonsäuren, Estern, Ketenen und deren Dimeren, Carbonsäure- und Pyrocarbonsäureestern, Sulfonsäureestern und -anhydriden, Isocyanaten und Polyisocyanaten, Epoxiden, Carbodiimide und Polycarbodiimiden, Aziridinen und Polyaziridinen, Glycidylethern, cyclischen Acetonen und Lactamen und ihren Derivaten, Peroxidscavengern und deren Gemischen.

2. Verfahren nach Anspruch 1, wobei das zelluläre Schaummaterial auf der Basis von Polyalkylenterephthalat Radikalfänger umfasst, die die Depolymerisation aufgrund der thermisch initiierten Reaktion zwischen dem (den) Duroplastharz(en) und dem thermoplastischen Schaum verhindern.

3. Laminatstruktur auf der Basis der Schutzschicht des (der) Duroplastharzes (Duroplastharze) und des thermoplastischen Schaums, herstellbar nach dem Verfahren nach einem der Ansprüche 1 bis 2.

4. Laminatsturktur nach Anspruch 3 in Form einer Sandwichstruktur, wobei der Sandwichverbundstoff zusätzliche Schutzschichten umfasst.

## Revendications

1. Procédé de protection d'un matériau de mousse alvéolaire en poly(téréphtalate d'alkylène), dans lequel le procédé comprend le revêtement de la mousse avec une couche protectrice de résine(s) thermodurcie(s) comprenant des épurateurs qui empêchent la dépolymérisation due à la réaction thermiquement initiée entre la(les) résine(s) thermodurcissable(s) et la mousse thermoplastique, dans lequel les épurateurs sont sélectionnés parmi les anhydrides aromatiques, aliphatiques et alicycliques, les copolymères contenant des anhydrides, les acides carboxyliques, les esters, les cétènes et leurs dimères, les esters carboniques et pyrocarboniques, les esters et les anhydrides sulfoniques, les isocyanates et les polyisocyanates, les époxydes, les carbodiimides et les polycarbodiimides, les aziridines et les polyaziridines, les éthers de glycidyles, les lactones et les lactames cycliques et leurs dérivés , les épurateurs peroxyde et leurs mélanges.

2. Procédé selon la revendication 1, dans lequel de manière supplémentaire le matériau de mousse alvéolaire en poly(téréphtalate d'alkylène) comprend des épurateurs qui empêchent la dépolymérisation dû à la réaction thermiquement initiée entre la(les) résine(s) thermodurcie(s) et la mousse thermoplastique.

3. Structure stratifiée à base de la couche protectrice, résine(s) thermodurcie(s) et mousse thermoplastique pouvant être obtenue selon le procédé selon l'une quelconque des revendications 1 à 2.

4. Structure stratifiée selon la revendication 3 sous la forme d'une structure de type sandwich, dans laquelle le matériau composite à structure de type sandwich comprend des couches protectrices additionnelles.
